# FASCICULE DE BREVET EUROPEEN

(11) **EP 2 111 069 B1**
(45) Date de publication et mention de la délivrance du brevet: **06.03.2013**
(21) Numéro de dépôt: 08156373.6
(22) Date de dépôt: 16.05.2008
(51) Int. Cl.: H04W 16/18

(54) **Dispositif et procédé d'optimisation du fonctionnement d'un réseau de communication cellulaire par définition assistée de zones de localisation**
Vorrichtung und Verfahren zur Funktionsoptimierung eines zellularen Kommunikationsnetzes durch unterstützte Definierung von Lokalisierungszonen
Device and method for optimising the operation of a cellular communication network by assisted definition of localisation areas

(30) Priorité: 04.06.2007 FR 0755439
(43) Date de publication de la demande: 21.10.2009
(73) Titulaire: Alcatel Lucent, 75007 Paris (FR)
(72) Inventeur: Brethereau, Alain, 78220, VIROFLAY (FR); Houllier, Jean-Roch, 91240, SAINT-MICHEL SUR ORGE (FR); De Mathan, Béatrix, 75016, PARIS (FR); Salomon, Eric, 75015, PARIS (FR)
(74) Mandataire: El Manouni, Josiane

(56) Documents cités:
- WO-A-01/78421
- WO-A-2006/052269
- WO-A-2006/079210
- US-A1- 2005 059 404
- CAMBRAY-DE MATHAN DE B ET AL: "L'OPTIMISATION DES RESEAUX CELLULAIRES ASSISTEE PAR ORDINATEUR: LE LOGICIEL RNO (RADIO NETWORK OPTIMISATION) COMPUTER-AIDED OPTIMIZATION OF CELLULAR NETWORKS: THE RNO (RADIO NETWORK OPTIMISATION) SOFTWARE" ANNALES DES TELECOMMUNICATIONS - ANNALS OF TELECOMMUNICATIONS, GET LAVOISIER, PARIS, FR, vol. 58, no. 7/8, juillet 2003 (2003-07), pages 964-1000, XP001186072 ISSN: 0003-4347

## Description

L'invention concerne les réseaux de communication cellulaires, et plus particulièrement l'optimisation du fonctionnement de tels réseaux.

On entend ici par « réseau de communication cellulaire » tout type de réseau radio (ou sans fil) comprenant un réseau d'accès radio dont la zone de couverture est définie par un ensemble de cellules (ou équivalent). Il pourra donc s'agir, par exemple, d'un réseau de téléphonie mobile ou cellulaire (GSM, GPRS/EDGE, UMTS ou CDMA2000, ainsi que toutes leurs variantes et tous leurs équivalents), ou d'un réseau local sans fil (standards WLAN (« Wireless Local Area Network » - IEEE 802.11, Wi-Fi, ETSI HiperLAN/2), Bluetooth (IEEE 802.15), WiMAX (IEEE 802.16, ETSI HiperMAN) et Zigbee), et d'une manière générale de tout type de réseau dans lequel le concept de décomposition en zones de localisation (ou « location areas » (ou LACs)) nécessite un paramétrage pouvant être adapté.

En raison des coûts de déploiement et de fonctionnement élevés des réseaux de communication cellulaires, les opérateurs de ces derniers sont contraints d'optimiser fréquemment le fonctionnement et/ou la configuration de leurs réseaux. Cette optimisation est une tâche difficile, notamment du fait de la coexistence de réseaux cellulaires ou de portions de réseau cellulaire de standards différents (par exemple et non limitativement GSM, GPRS, EDGE, UMTS, 3G LTE, WiMAX, WiFi et analogues). Elle nécessite en effet non seulement le suivi de la qualité de service (ou « QoS ») dans chaque cellule d'un réseau cellulaire, mais également l'analyse des causes qui sont à l'origine des problèmes de qualité de service. Cette analyse s'avère souvent complexe en raison du nombre élevé de facteurs internes et externes au réseau (comme par exemple la géographie et le géomarketing) qui peuvent avoir une influence sur la qualité de service ainsi que sur le trafic.

Il est donc utile que les opérateurs disposent d'informations (comme par exemple des indicateurs) leur permettant de réduire la complexité de la gestion de leur réseau cellulaire, et donc d'analyser, mieux et plus vite, la qualité de service. L'invention vise plus particulièrement à assister (de façon semi-automatique) un opérateur à définir des zones de localisation (ou « location areas » ou encore LACs) pour une partie au moins de son réseau de communication cellulaire.

On entend ici par « zone de localisation » (ou « location area ») une zone définie par un groupe de cellules dont les éléments qui les constituent géographiquement à un instant donné ont le même comportement de localisation dans le réseau. Par exemple, en GSM ou en UMTS, une zone de localisation (LAC) est définie par un groupe de cellules ayant un même code de « paging », i.e. un ensemble de cellules qui sont averties simultanément d'un appel entrant concernant l'une d'entre elles. Une station mobile peut donc se déplacer librement à l'intérieur d'une zone de localisation donnée sans qu'il faille actualiser l'enregistreur de positions du réseau. On notera qu'une zone de localisation est théoriquement indépendante de l'ensemble des cellules qui sont gérées par un même contrôleur de réseau radio (RNC ou BSC).

La définition des zones de localisation est particulièrement importante au sein d'un réseau cellulaire. En effet, lorsque les zones de localisation sont très grandes, de nombreux terminaux mobiles vont fonctionner simultanément. Par conséquent, cela va induire un très important trafic dit de « paging » (informations de recalage de terminal mobile), du fait que toutes les requêtes de paging doivent être diffusées vers toutes les stations de base qui font partie d'une zone de localisation, et donc cela entraîne non seulement un gaspillage de la bande passante, mais également un gaspillage de l'énergie stockée dans les batteries des terminaux mobiles étant donné que ces derniers doivent écouter les messages diffusés une trop grande partie du temps. Maintenant, lorsque les zones de localisation sont petites, les terminaux mobiles doivent contacter le réseau beaucoup plus souvent pour lui signaler un changement de zone de localisation, ce qui entraîne également un gaspillage de l'énergie stockée dans leurs batteries.

Aujourd'hui, la définition des zones de localisation se fait généralement de façon manuelle (et donc non assistée) ce qui est particulièrement compliqué du fait du nombre de critères qui doivent être pris en considération (par exemple l'occupation du sol, le relief et la qualité de service).

Il existe certes quelques méthodes algorithmiques de partitionnement du réseau en zones de localisation (LACs). Mais, elles reposent principalement sur une optimisation en fonction de statistiques de mobilité des stations mobiles, et non sur une prise en compte de la représentation cartographique du réseau et donc de composantes cartographiques localisées. C'est notamment le cas de la méthode décrite dans le document brevet US 2005/059404.

Il a également été proposé dans le document brevet WO 2006/052269 d'effectuer une analyse automatisée de charges de trafic et de diagrammes de mobilité d'usagers en fonction d'informations représentatives de la topologie d'un réseau et de données statistiques relatives à ce réseau et à certains de ses équipements de réseau, puis l'affichage graphique du résultat de cette analyse avec d'éventuelles informations associées sur un plan ou éventuellement une carte. Cet affichage peut notamment permettre de matérialiser des zones de localisation (ou "location areas"), et donc une personne peut analyser une portion de réseau afin de tenter d'optimiser son fonctionnement en jouant sur des paramètres de réseau et en fonction d'éventuelle(s) contrainte(s).

L'invention a donc pour but de fournir une assistance combinant une automatisation au moins partielle, principalement basée sur des informatisons à composante géographique (localisée), de la définition des zones de localisation (LACs) dans une partie au moins d'un réseau de communication cellulaire avec la possibilité de corriger manuellement cette définition.

Elle propose à cet effet un dispositif, dédié à l'optimisation du fonctionnement (et/ou de la configuration) d'une partie au moins d'un réseau de communication cellulaire comportant des objets de positions géographiques connues, et comprenant des moyens de traitement chargées, en cas de sélection d'une zone géographique couverte par le réseau et d'au moins un critère cartographique relatif à des objets et choisi dans un groupe comprenant au moins des critères géographiques, des critères d'occupation d'une zone géographique, et des critères de communication, de constituer, au sein de cette zone géographique sélectionnée et en fonction de chaque critère cartographique sélectionné, des groupes de cellules définissant chacun une zone de localisation (ou local area), et des moyens d'interface agencés pour permettre à un utilisateur de fournir manuellement au moins une contrainte, les moyens de traitement étant en outre agencés, d'une part, pour constituer, au sein de la zone géographique sélectionnée et en fonction de chaque critère cartographique sélectionné et de chaque contrainte fournie, des groupes de cellules définissant chacun une zone de localisation, et, d'autre part, pour générer un message d'alarme en cas de détection d'un objet de type site associé à des cellules appartenant à au moins deux zones de localisation différentes.

On entend ici par « objet » tout élément de réseau ou de topologie de réseau (par exemple une station de base (Node B, BS ou BTS), une cellule ou une adjacence).

Le dispositif selon l'invention peut comporter d'autres caractéristiques qui peuvent être prises séparément ou en combinaison et notamment:
- ses critères cartographiques peuvent être choisis parmi (au moins) des critères géographiques, des critères d'occupation d'une zone géographique, et des critères de communication;
   ➢ les critères géographiques peuvent par exemple être choisis parmi (au moins) des critères de sélection d'objets, des critères de localisation et le relief au sein d'une zone géographique ;
   ➢ les critères d'occupation d'une zone géographique peuvent par exemple être choisis parmi (au moins) des critères de sélection d'axes de transport et des critères de sélection d'informations relatives à l'occupation d'une zone-géographique ;
   ➢ les critères de communication peuvent par exemple être choisis parmi (au moins) la couverture radio, des critères de sélection de compteurs, des critères de sélection d'indicateurs de qualité de service, et un critère de sélection d'une décomposition connue en zones de localisation ;
- il peut comprendre des moyens de stockage destinés à stocker les positions géographiques des objets et des critères cartographiques présentant des relations avec ces objets ;
- la contrainte peut par exemple être une définition de limite(s) entre zones de localisation ;
- les moyens d'interface peuvent permettre à un utilisateur de sélectionner manuellement au moins une zone géographique et au moins un critère cartographique, et de communiquer aux moyens de traitement les définitions des zone(s) géographique(s) et critère(s) cartographique(s) sélectonnés.

L'invention propose également un équipement de gestion de réseau équipé d'un dispositif d'optimisation du type de celui présenté ci-avant.

L'invention propose également un procédé, dédié à l'optimisation du fonctionnement d'une partie au moins d'un réseau de communication cellulaire comprenant des objets de positions géographiques connues, et consistant :
- à stocker les positions géographiques des objets et des critères cartographiques présentant des relations avec ces objets et choisis dans un groupe comprenant au moins des critères géographiques, des critères d'occupation d'une zone géographique, et des critères de communication,
- en cas de sélection d'une zone géographique couverte par le réseau et de l'un au moins des critères cartographiques, à constituer, au sein de cette zone géographique sélectionnée et en fonction de chaque critère cartographique sélectionné, des groupes de cellules définissant chacun une zone de localisation (ou local area)
- à permettre à un utilisateur de fournir manuellement au moins une contrainte,
- à constituer, au sein de la zone géographique sélectionnée et en fonction. de chaque critère cartographique sélectionné et de chaque contrainte fournie, des groupes de cellules définissant chacun une zone de localisation, et
- en cas de détection d'un objet de type site, associé à des cellules appartenant à au moins deux zones de localisation différentes, à générer un message d'alarme.

Cette contrainte peut par exemple être une définition de limite(s) entre zones de localisation.

D'autres caractéristiques et avantages de l'invention apparaîtront à l'examen de la description détaillée ci-après, et des dessins annexés, sur lesquels :
- la figure 1 illustre de façon très schématique et fonctionnelle un système de gestion de réseau équipé d'un exemple de réalisation d'un dispositif d'optimisation selon l'invention,
- la figure 2 illustre un exemple de carte de zone géographique matérialisant des sites et les cellules associées, ainsi que des axes de transport (route et voies de chemin de fer),
- la figure 3 est identique à la figure 2, mais avec en complément la matérialisation, en gris, des cellules qui englobent les axes de transport (définis dans la légende) et, en traits discontinus (LZ), de limites entre zones de localisation fournies par un utilisateur,
- la figure 4 est identique à la figure 3, mais avec en complément la matérialisation, en lignes de type tiret-point (FZ), d'un premier exemple de frontières entre zones de localisation déterminées par le dispositif d'optimisation selon l'invention,
- la figure 5 est identique à la figure 4, mais sans les limites (LZ) et avec en complément la matérialisation des sites associés à des cellules appartenant à des zones de localisation différentes et le signalement des cellules que l'utilisateur souhaite inclure dans des zones de localisation différentes de celles auxquelles elles appartiennent dans le premier exemple de frontières,
- la figure 6 est identique à la figure 4, mais sans les limites (LZ) et avec en complément la matérialisation en lignes de type tiret-point (FZ) d'un deuxième exemple de frontières entre zones de localisation déterminées par le dispositif d'optimisation selon l'invention et prenant en compte une contrainte d'intégration de cellules fournie par l'utilisateur,
- la figure 7 est identique à la figure 6, mais avec en complément la matérialisation dans les différentes cellules de la première zone de localisation (LA1) des valeurs prises par un indicateur de trafic,
- la figure 8 illustre un troisième exemple de frontières entre zones de localisation déterminées par le dispositif d'optimisation selon l'invention dans le cas d'une prise en compte d'une contrainte sur les valeurs prises par un indicateur de trafic dans les cellules traversées par la route, fournie par l'utilisateur,
- la figure 9 illustre un quatrième exemple de frontières entre zones de localisation déterminées par le dispositif d'optimisation selon l'invention à partir de la carte de la figure 8 et dans le cas d'une prise en compte de contraintes sur l'intégration de cellules et sur l'interdiction de fractionnement des zones de localisation, fournies par l'utilisateur.

Les dessins annexés pourront non seulement servir à compléter l'invention, mais aussi contribuer à sa définition, le cas échéant.

L'invention a pour objet de permettre la définition au moins partiellement automatique, principalement basée sur des informations à composante géographique (localisée), de la définition de zones de localisation dans une partie au moins d'un réseau de communication cellulaire, tout en laissant (à l'opérateur du réseau) la possibilité de modifier manuellement cette définition pour prendre en compte, par exemple, des informations dont il dispose mais qui ne sont pas connues du système de gestion du réseau.

Dans ce qui suit, on considère à titre d'exemple non limitatif que le réseau de communication cellulaire est un réseau de téléphonie cellulaire (ou mobile), comme par exemple un réseau GSM, ou GPRS/EDGE, ou UMTS, ou encore CDMA2000. Mais, l'invention n'est pas limitée à ce type de réseau cellulaire. Elle concerne en effet tout type de réseau de communication radio, et notamment les réseaux locaux sans fil (standards WLAN (« Wireless Local Area Network » - IEEE 802.11, Wi-Fi, ETSI HiperLAN/2), Bluetooth (IEEE 802.15), WiMAX (IEEE 802.16, ETSI HiperMAN) et Zigbee). D'une manière générale, l'invention concerne tout type de réseau dans lequel le concept de décomposition en zones de localisation (ou location areas (LACs)) nécessite un paramétrage pouvant être adapté.

Il est rappelé qu'un réseau cellulaire (RC) peut être schématiquement résumé à un réseau de commutation (ou « Core Network ») couplé à un réseau d'accès radio (appelé UTRAN dans le cas d'un réseau UMTS et BSS dans le cas d'un réseau GSM), lui-même raccordé à un système de gestion de réseau ou NMS (pour « Network Management System »).

Le réseau RC comporte des éléments (ou équipements) de réseau. On entend ici par « élément (ou équipement) de réseau » tout constituant (physique et/ou logique) d'un réseau par lequel passent des trafics qui peuvent être définis localement par des valeurs de paramètre(s) ou d'indicateur(s) (par exemple de qualité de service (QoS)) pouvant être mesuré(e)s ou estimé(e)s par le système de gestion de réseau (NMS). Il pourra donc s'agir, par exemple, d'une cellule dans laquelle des terminaux mobiles peuvent établir ou poursuivre des communications, ou d'un équipement de réseau, tel qu'un routeur, une station de base (Node B dans le cas d'un réseau UMTS et BTS dans le cas d'un réseau GSM), ou un contrôleur de réseau radio (RNC dans le cas d'un réseau UMTS et BSC dans le cas d'un réseau GSM). II est rappelé qu'une station de base (Node B ou BTS) est implantée dans un site Si (i = 1 à N), de position géographique connue, et comporte au moins une antenne associée à une cellule de position géographique connue (et éventuellement à un ou plusieurs secteurs). Par ailleurs, chaque contrôleur de réseau radio (RNCs ou BSCs) contrôle au moins deux (généralement plusieurs dizaines, voire plusieurs centaines) stations de base (ou équivalent), et est notamment chargé de l'allocation des canaux radio, de la réception des mesures effectuées par les terminaux mobiles et du contrôle des transferts entre stations de base (ou « handovers »).

Certains au moins des éléments (ou équipements) de réseau mentionnés ci-dessus constituent des objets (de réseau). C'est notamment le cas des stations de base (Node Bs et BTSs), des contrôleurs de réseau radio (RNCs et BSCs) et des cellules. On notera que les objets peuvent être des éléments de réseau ou bien des éléments de topologie de réseau comme par exemple des adjacences.

L'invention propose d'équiper un réseau cellulaire RC d'au moins un dispositif D chargé d'optimiser le fonctionnement (et/ou la configuration) de l'une au moins de ses parties implantée dans une zone géographique connue.

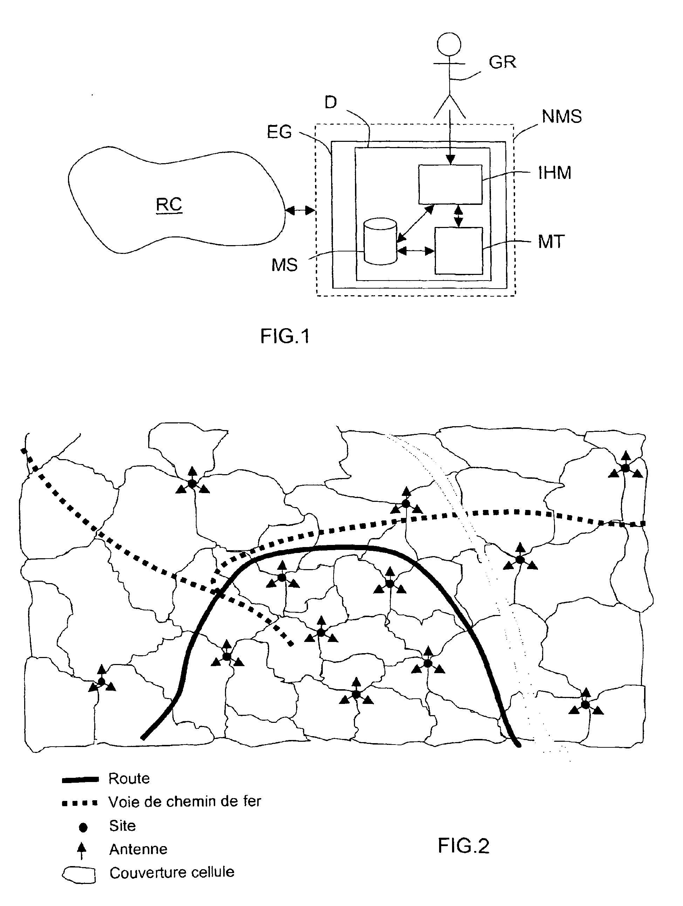

Comme cela est schématiquement et fonctionnellement illustré à titre d'exemple non limitatif sur la figure 1, un dispositif d'optimisation D peut faire partie d'un équipement de gestion EG (tel qu'un ordinateur ou une station de travail) chargé de gérer au moins partiellement le fonctionnement et/ou la planification et/ou la configuration du réseau.

Comme illustré, cet équipement de gestion EG peut lui-même faire éventuellement partie du système de gestion de réseau NMS. Dans une variante, le dispositif d'optimisation D peut constituer à lui seul un équipement de gestion EG pouvant éventuellement faire partie du (ou être couplé au) système de gestion de réseau NMS. Ainsi, un dispositif d'optimisation D peut faire partie d'un (ou constituer un) outil d'optimisation de réseau, par exemple de type RNO® ou NPO®.

Un dispositif d'optimisation D selon l'invention comprend au moins un module de traitement MT chargé d'intervenir chaque fois qu'une zone géographique (couverte par le réseau RC) et au moins un critère cartographique (présentant au moins une relation avec des objets du réseau cellulaire RC) ont été sélectionnés, afin de constituer, au sein de cette zone géographique sélectionnée et en fonction de chaque critère cartographique sélectionné, des groupes de cellules définissant chacun une zone de localisation (ou local area) LAj.

Chaque critère cartographique est sélectionné parmi une liste qui est stockée dans des moyens de stockage MS qui font partie préférentiellement, mais pas obligatoirement, du dispositif d'optimisation D. Ils pourraient en effet faire partie de l'équipement de gestion EG dans lequel est éventuellement implanté le dispositif d'optimisation D, ou bien du système de gestion de réseau NMS, l'important étant que leur contenu soit accessible au dispositif d'optimisation D.

Ces moyens de stockage MS stockent également les positions géographiques de certains au moins des objets du réseau, et notamment les stations de base, les contrôleurs de réseau radio et les cellules.

De préférence, ces moyens de stockage MS stockent également d'autres informations, comme par exemple et non limitativement, les positions géographiques des axes de transport (routes, voies de chemin de fer, voies fluviales, canaux) et des bâtiments et/ou des informations relatives à l'occupation du sol (immeuble d'habitation, immeuble de bureau, école, usine, aéroport, gare, port, musée, centre de conférences ou de spectacle, cinéma, centre commercial ou stade de sport) et/ou des valeurs prises par des indicateurs, compteurs ou paramètres dans des cellules et/ou des informations relatives au relief dans une (des) zone(s) géographique(s). Les moyens de stockage MS peuvent également stocker les données définissant la (les) carte(s) géographique(s) (éventuellement avec les reliefs) des zones dans lesquelles le réseau cellulaire RC est implanté.

De façon générale, toute donnée de nature géographique et sous jacente pourra être utilisée comme critère de détermination de zone de localisation (LAC) par le dispositif D. Par ailleurs, ces données peuvent résulter d'observations directes ou indirectes (comme par exemple un sondage) et/ou peuvent être des données prévisionnelles (comme par exemple une nouvelle route). En outre, ces données ne couvrent pas forcément toute la zone d'analyse.

On notera qu'une partie des informations précitées peut être stockée dans l'équipement de gestion EG dans lequel est éventuellement implanté le dispositif d'optimisation D, ou bien dans une partie du système de gestion de réseau NMS, l'important étant qu'ils soient accessibles au dispositif d'optimisation D.

Les moyens de stockage MS peuvent se présenter sous n'importe quelle forme, et notamment sous la forme d'une mémoire ou d'une base de données ou encore d'un système de gestion de fichiers.

Les critères cartographiques peuvent être de tout type dès lors qu'ils peuvent être utiles à la détermination de zones de localisation (ou location areas). Mais, de préférence, les critères cartographiques sont choisis parmi des critères géographiques, des critères d'occupation d'une zone géographique et des critères de communication.

Par exemple, les critères géographiques peuvent être choisis parmi (au moins) des critères de sélection d'objets de positions géographiques connues (comme par exemple les sites (ou stations de base) Si et/ou les cellules Cik), des critères de localisation, et le relief au sein d'une zone géographique (par exemple donné par un modèle d'élévation numérique (vue tridimensionnelle)).

Par exemple, les critères d'occupation d'une zone géographique peuvent être choisis parmi (au moins) des critères de sélection d'axes de transport (routes, voies de chemin de fer, voies fluviales, canaux et analogues) et des critères de sélection liés à tout type d'occupation d'une zone géographique (immeuble d'habitation, immeuble de bureau, école, usine, aéroport, gare, port, musée, centre de conférences ou de spectacle, cinéma, centre commercial, stade de sport, ou analogue). D'une manière générale, et comme indiqué précédemment, toute donnée à dimension géographique présente dans une carte pourra être utilisée en entrée par le dispositif D lors de son assistance à la définition des zones de localisation (LACs).

Par exemple, les critères de communication peuvent être choisis parmi (au moins) la couverture radio qui est liée aux définitions géographiques des cellules, des critères de sélection de compteurs et/ou d'indicateurs de qualité de service (QoS), et un critère de sélection d'une décomposition connue en zones de localisation (éventuellement déterminée précédemment avec le dispositif D compte tenu de certain(s) critère(s) et d'éventuelle(s) contrainte(s))

On notera que certaines décompositions en zones de localisation peuvent être des invariants qui sont stockés et qui servent de base à l'élaboration de nouvelles décompositions. Par conséquent, ces invariants ne peuvent pas être modifiés. On peut également stocker certaines au moins des décompositions déterminées au moyen du dispositif D, selon un classement temporel (ou « historisé »), afin de les utiliser pour déterminer de futures décompositions.

Parmi les compteurs et indicateurs que l'on peut utiliser, on notera notamment et non limitativement, les flux de handovers (qui permettent de déterminer si les dimensions des zones de localisation sont appropriées), les mises à jour des positions des terminaux mobiles, les quantités de messages de paging ou de signalisation au sein d'une même zone de localisation, et les taux de succès de paging (fournis par le NSS dans le cas d'un réseau GSM et utiles pour déterminer la pertinence des contours des zones de localisation).

Le module de traitement MT est chargé d'intervenir chaque fois qu'une zone géographique couverte par le réseau RC et l'un au moins des critères cartographiques stockés dans les moyens de stockage MS ont été sélectionnés.

Cette sélection peut être fournie au dispositif d'optimisation D par un équipement du réseau cellulaire RC ou de l'opérateur du réseau, ou bien par un utilisateur (ou gestionnaire de réseau) GR. Dans ce dernier cas, la sélection se fait au moyen d'une interface homme/machine IHM qui peut faire partie, au moins partiellement, du dispositif D (comme illustré) ou de l'éventuel équipement de gestion EG ou du NMS. Lorsque le dispositif D comprend les moyens de stockage MS, il doit également comprendre une partie au moins de l'interface homme/machine IHM, couplée aux moyens de stockage MS et au module de traitement MT afin, d'une part, de permettre à un utilisateur GR d'effectuer sa sélection de zone géographique et de critère(s), et d'autre part, de communiquer la définition de la sélection au module de traitement MT en vue de la détermination de zone(s) de localisation LAj.

Cette interface homme/machine IHM est constituée de tout élément informatique permettant à un utilisateur GR d'effectuer ses sélections et des saisies de données sur l'écran destiné à afficher les cartes matérialisant les zones géographiques sélectionnées et les résultats du travail du dispositif D compte tenu des critères cartographiques sélectionnés. Elle comprend par exemple un clavier de saisie et une souris, ainsi qu'éventuellement un écran tactile.

On notera que l'interface homme/machine IHM peut également (et éventuellement) permettre à l'utilisateur GR de fournir au moins une contrainte, soit avant que le module de traitement MT ait déterminé des zones de localisation LAj, soit après qu'il ait déterminé des zones de localisation LAj avec le(s) critère(s) cartographique(s) sélectionné(s). En effet, dans une variante avantageuse le module de traitement MT peut être agencé de manière à constituer, au sein d'une zone géographique sélectionnée et en fonction de chaque critère cartographique sélectionné et de chaque contrainte fournie, des groupes de cellules définissant chacun une zone de localisation.

Dans cette variante l'utilisateur GR peut donc modifier à tout moment le(s) critère(s) sélectionné(s) et/ou adjoindre à ce(s) dernier(s) une ou plusieurs contraintes.

Tout type de contrainte cartographique, et donc ayant une relation avec les objets ou les compteurs ou indicateurs associés, peut être utilisé. Ainsi, une contrainte peut porter sur une valeur d'indicateur ou de compteur ou bien sur au moins une limite (grossière) définie par l'utilisateur GR au moyen d'une ligne sur la carte qui représente la zone géographique objet de l'optimisation et qui est affichée sur l'écran qui est couplé au dispositif D.

On va maintenant décrire des exemples non limitatifs d'utilisation du dispositif D (et donc du procédé d'optimisation) en référence aux figures 2 à 9.

On a représenté sur la figure 2 un exemple de carte d'une zone géographique sélectionnée par un utilisateur GR à l'aide du dispositif D. Dans cet exemple, l'utilisateur GR a décidé d'afficher sur la carte les sites et les cellules associées, ainsi que certains axes de transport (une route (par exemple une autoroute) et deux voies de chemin de fer). Ici, chaque site matérialise une station de base pourvue de trois antennes associées respectivement à trois cellules. Les sites, les cellules associées, et les axes de transport constituent des contraintes cartographiques.

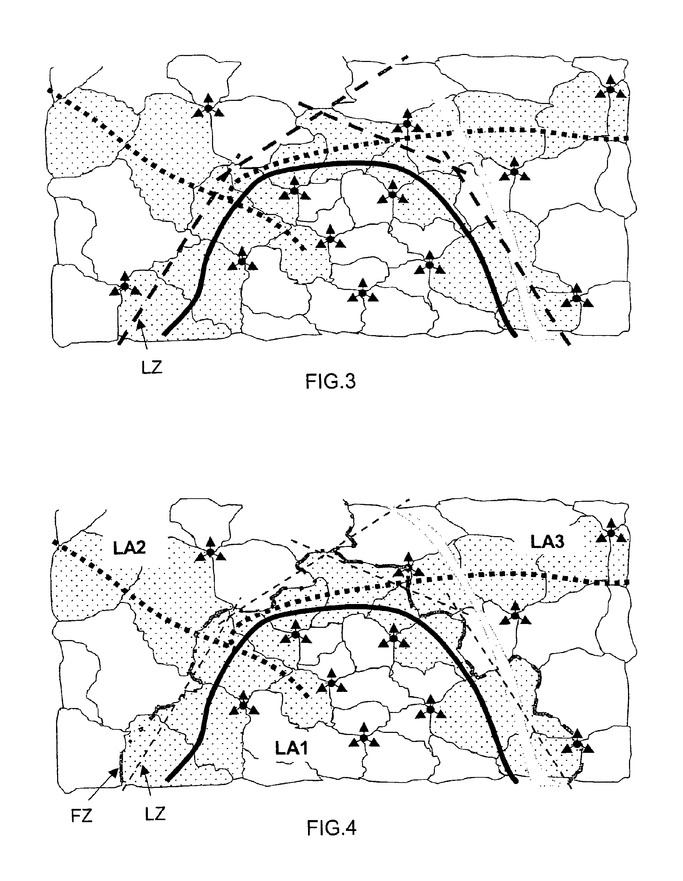

On a représenté sur la figure 3 l'aspect de la carte de la figure 2 après que l'utilisateur GR ait défini en traits discontinus et en tant que contrainte, au moyen de l'interface homme/machine IHM, quatre limites LZ pour les futures zones de localisation LAj. Les cellules qui englobent les axes de transport sont matérialisées en gris. Ces limites LZ sont destinées à indiquer au module de traitement MT qu'il doit intégrer les cellules qu'elles entourent sensiblement dans une même zone de localisation LAj.

On a représenté sur la figure 4 l'aspect de la carte de la figure 3 après que le module de traitement MT ait effectué sa détermination de zones de localisation dans la zone géographique sélectionnée et pour les critères et contraintes précitées. Les frontières FZ entre les trois zones de localisation LA1 à LA3 (j = 1 à 3) sont matérialisées par des lignes de type tiret-point. On notera que la zone LA1 est effectivement constituée des cellules par lesquelles passe l'axe routier et qui sont situées en dessous des (ou pour certaines traversées par les) limites de zones LZ (contrainte).

A ce stade, on dispose d'un premier exemple de frontières FZ entre zones de localisation LAj.

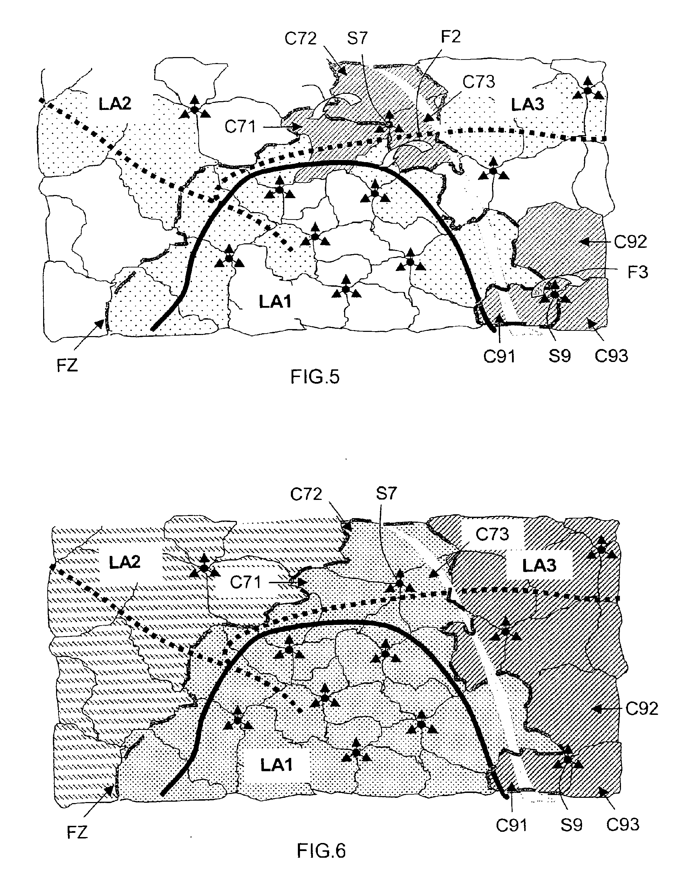

Comme on l'observe mieux sur la figure 5, certains sites (ici S7 et S9) de la carte possèdent des cellules Cik (i = 7 ou 9 et k = 1 à 3) appartenant à deux zones de localisation différentes. Cela n'est pas satisfaisant dans la mesure où il est souhaitable qu'un contrôleur de réseau radio contrôle toutes les stations de base contenues dans une zone de localisation, et donc qu'il n'est pas souhaité que des antennes d'une station de base soient contrôlées par deux contrôleurs de réseau radio différents.

On notera que le module de traitement MT peut éventuellement être agencé de manière à générer une alarme destinée à être affichée sur l'écran afin de signaler à l'utilisateur l'existence de sites possédant des cellules appartenant à des zones de localisation différentes. Par exemple, et comme illustré sur la figure 5, les cellules Cik d'un site posant problème peuvent être matérialisées dans une couleur particulière, par exemple le rouge (dans l'exemple c'est du gris foncé), afin d'attirer l'attention de l'utilisateur GR.

A ce stade, l'utilisateur GR peut par exemple fournir au module de traitement MT de nouvelles contraintes pour qu'il détermine de nouvelles frontières de zones de localisation LAj, compte tenu de ces dernières. Ici, les nouvelles contraintes consistent, d'une part, à intégrer dans la zone de localisation LA1 les cellules C72 et C73 du site S7 (flèches F1 et F2) contenues dans la zone de localisation LA3, et d'autre part, à intégrer dans la zone de localisation LA3 la cellule C91 du site S9 (flèche F3) contenue dans la zone de localisation LA1.

On a représenté sur la figure 6 l'aspect de la carte de la figure 4 après que le module de traitement MT ait effectué sa nouvelle détermination de zones de localisation dans la zone géographique sélectionnée et pour les critères initiaux, la contrainte initiale (limites LZ) et les nouvelles contraintes additionnelles relatives à l'intégration des cellules. Avec cette nouvelle décomposition des zones de localisation LAj, les cellules de chaque site Si sont intégralement englobées dans une zone de localisation LAj.

On notera qu'il est également possible d'agencer le module de traitement MT de sorte qu'il délivre un bilan relatif aux zones de localisation déterminées LAj. Par exemple, un tel bilan peut comporter pour chaque zone de localisation déterminée LAj le nombre de cellules, la surface occupée et le nombre d'habitants. Les informations contenues dans ce bilan peuvent être éventuellement choisies par l'utilisateur GR.

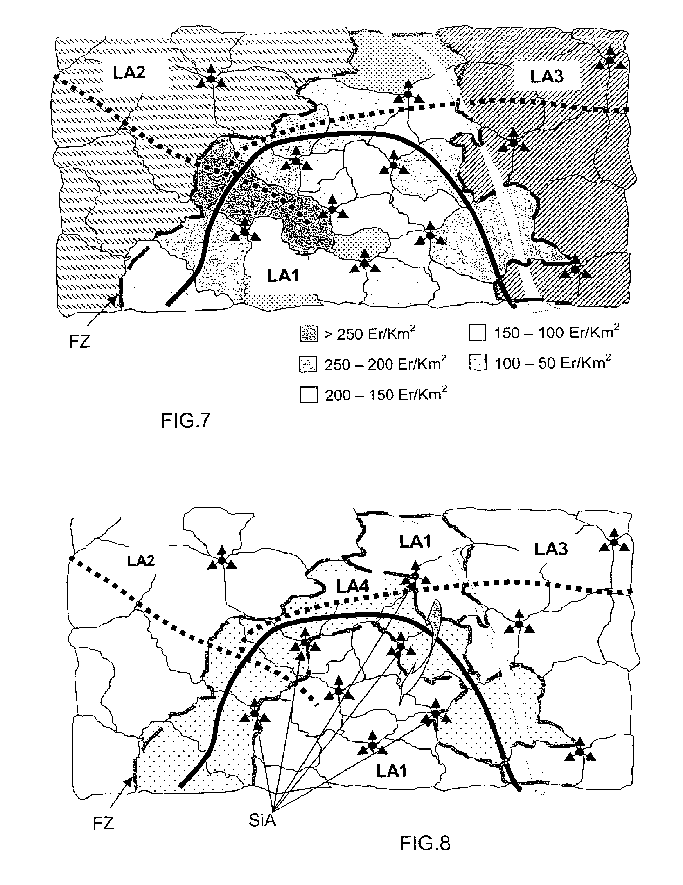

On notera également qu'il est possible de sauvegarder, par exemple dans les moyens de stockage MS, une décomposition en zones de localisation LAj. Ainsi, une décomposition en zones de localisation peut à tout instant servir de base à une nouvelle détermination de zones de localisation, pour la même zone géographique (ou une zone plus restreinte). C'est notamment le cas de l'exemple illustré sur la figure 7.

Plus précisément, on considère dans le cas de la figure 7, que l'utilisateur souhaite adjoindre à la carte de la figure 6 un nouveau critère cartographique relatif à une densité d'occupation dans les cellules. La densité d'occupation sélectionnée est ici un indicateur de trafic donné en Erlangs/par km². On a matérialisé sur la figure 7 les différentes cellules contenues dans la première zone de localisation LA1 en fonction de la valeur prise par l'indicateur de trafic sélectionné. Les différents niveaux de gris correspondent à différents intervalles de valeurs mentionnés dans la légende de la figure 7.

L'utilisateur GR considérant que le trafic est trop important dans les cellules par lesquelles passent la route et une partie des voies de chemin de fer, il sélectionne un nouveau critère consistant à définir une zone de localisation englobant la route. Puis, il demande au dispositif D d'appliquer ce nouveau critère à la carte de la figure 6 (résultant d'une détermination antérieure).

On a représenté sur la figure 8 l'aspect de la carte de la figure 7 après que le module de traitement MT ait effectué sa nouvelle détermination de zones de localisation dans la zone géographique de la carte de la figure 6 et pour le nouveau critère relatif à l'intégration de la route dans une zone de localisation plus petite. Comme on peut l'observer, avec cette nouvelle décomposition des zones de localisation LAj (j = 1 à 4), la route est bien contenue à l'intérieur d'une zone de localisation spécifique LA4. Mais, cinq sites SiA de la carte possèdent des cellules qui appartiennent à deux zones de localisation différentes, ce qui n'est pas satisfaisant comme exposé précédemment. En outre, la zone de localisation LA1 est décomposée en deux parties séparées par la zone de localisation spécifique LA4 ce qui n'est également pas satisfaisant.

On notera que le module de traitement MT peut éventuellement être agencé de manière à générer une alarme destinée à être affichée sur l'écran afin de signaler à l'utilisateur l'existence d'une zone de localisation séparée en plusieurs parties disjointes. Par exemple, et comme illustré sur la figure 8, les deux parties disjointes de la zone de localisation LA1 peuvent être signalées par une flèche qui les relie, afin d'attirer l'attention de l'utilisateur GR.

A ce stade, l'utilisateur GR peut par exemple fournir manuellement au module de traitement MT de nouvelles contraintes pour qu'il détermine de nouvelles frontières de zones de localisation LAj, compte tenu de ces dernières. Ici, les nouvelles contraintes consistent, d'une part, à interdire le fractionnement d'une zone de localisation, et d'autre part, à interdire qu'un site possède des cellules appartenant à plusieurs zones de localisation différentes.

Il est important de noter que l'utilisateur GR peut interagir manuellement à tout moment avec la carte qui est délivrée par le dispositif D. Il est donc possible d'ajouter et/ou retirer des contributions à la main de manière à affiner une carte, y compris intermédiaire, délivrée de façon automatisée par le dispositif D.

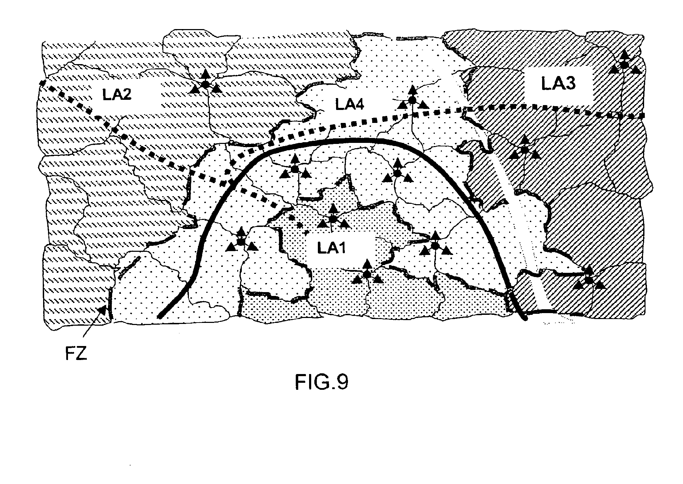

On a représenté sur la figure 9 l'aspect de la carte de la figure 8 après que le module de traitement MT ait effectué sa nouvelle détermination de zones de localisation dans la zone géographique sélectionnée et pour les nouvelles contraintes relatives à l'interdiction de fractionnement et à l'intégration des cellules. Avec cette nouvelle décomposition des zones de localisation LAi, on peut constater que les cellules de chaque site Si sont intégralement englobées dans une zone de localisation LAj et qu'aucune zone de localisation n'est fractionnée en parties disjointes.

De nouveau, un bilan peut être éventuellement demandé au dispositif D afin d'être affiché sur l'écran.

Le dispositif d'optimisation D selon l'invention, et notamment son module de traitement MT, et ses éventuels moyens de stockage et interface homme/machine IHM, peuvent être réalisés sous la forme de modules logiciels (ou informatiques), de circuits électroniques, ou d'une combinaison de circuits et de logiciels, voire même de périphérique(s) informatique(s).

Grâce à l'invention, il est désormais possible d'automatiser au moins partiellement la détermination des zones de localisation d'une partie au moins d'un réseau de communication cellulaire, quel qu'en soit le standard, et y compris s'il s'agit d'un réseau multi-standards, tout en laissant la possibilité à l'opérateur d'intervenir manuellement à tout moment dans un résultat de détermination.

L'invention ne se limite pas aux modes de réalisation de dispositif d'optimisation et d'équipement de gestion de réseau décrits ci-avant, seulement à titre d'exemple, mais elle englobe toutes les variantes que pourra envisager l'homme de l'art dans le cadre des revendications ci-après.

## Revendications

1. Dispositif (D) d'optimisation du fonctionnement d'une partie au moins d'un réseau de communication cellulaire (RC) comprenant des objets, notamment de type cellule, de positions géographiques connues, ledit dispositif (D) comprenant des moyens de traitement (MT) agencés, en cas de sélection d'une zone géographique couverte par ledit réseau (RC) et d'au moins un critère cartographique présentant une relation avec des objets et choisi dans un groupe comprenant au moins des critères géographiques, des critères d'occupation d'une zone géographique, et des critères de communication, pour constituer, au sein de ladite zone géographique sélectionnée et en fonction de chaque critère cartographique sélectionné, des groupes de cellules définissant chacun une zone de localisation, le dispositif (D) comprenant des moyens d'interface (IHM) agencés pour permettre à un utilisateur de fournir manuellement au moins une contrainte, et **caractérisé en ce que** lesdits moyens de traitement (MT) sont agencés, d'une part, pour constituer, au sein de ladite zone géographique sélectionnée et en fonction de chaque critère cartographique sélectionné et de chaque contrainte fournie, des groupes de cellules définissant chacun une zone de localisation, et, d'autre part, pour générer un message d'alarme en cas de détection d'un objet de type site associé à des cellules appartenant à au moins deux zones de localisation différentes.

2. Dispositif selon la revendication 1, **caractérisé en ce que** ladite contrainte est une définition de limite(s) entre zones de localisation.

3. Dispositif selon l'une des revendications 1 et 2, **caractérisé en ce que** lesdits moyens d'interface (IHM) sont agencés pour permettre à un utilisateur de sélectionner manuellement au moins une zone géographique et au moins un critère cartographique, et pour communiquer auxdits moyens de traitement (MT) les définitions des zone(s) géographique(s) et critère(s) cartographique(s) sélectionnés.

4. Dispositif selon l'une des revendications 1 à 3, **caractérisé en ce que** lesdits critères géographiques sont choisis dans un groupe comprenant au moins des critères de sélection d'objets, des critères de localisation et le relief au sein d'une zone géographique.

5. Dispositif selon l'une des revendications 1 à 4, **caractérisé en ce que** lesdits critères d'occupation d'une zone géographique sont choisis dans un groupe comprenant au moins des critères de sélection d'axes de transport et des critères de sélection d'informations relatives à l'occupation d'une zone géographique.

6. Dispositif selon l'une des revendications 1 à 5, **caractérisé en ce que** lesdits critères de communication sont choisis dans un groupe comprenant au moins la couverture radio, des critères de sélection de compteurs, des critères de sélection d'indicateurs de qualité de service, et un critère de sélection d'une décomposition connue en zones de localisation.

7. Dispositif selon l'une des revendications 1 à 6, **caractérisé en ce qu'**il comprend des moyens de stockage (MS) propres à stocker les positions géographiques desdits objets et des critères cartographiques présentant des relations avec lesdits objets.

8. Equipement (EG) de gestion de réseau de communication (RC), comprenant un dispositif d'optimisation (D) selon l'une des revendications précédentes.

9. Procédé d'optimisation du fonctionnement d'une partie au moins d'un réseau de communication cellulaire (RC) comprenant des objets, notamment de type cellule, de positions géographiques connues, ledit procédé consistant i) à stocker les positions géographiques desdits objets et des critères cartographiques présentant des relations avec lesdits objets et choisis dans un groupe comprenant au moins des critères géographiques, des critères d'occupation d'une zone géographique, et des critères de communication, et ii) en cas de sélection d'une zone géographique couverte par ledit réseau (RC) et de l'un au moins desdits critères cartographiques, à constituer, au sein de ladite zone géographique sélectionnée et en fonction de chaque critère cartographique sélectionné, des groupes de cellules définissant chacun une zone de localisation, le procédé permettant à un utilisateur de fournir manuellement au moins une contrainte et **caractérisé en ce qu'**il consiste en outre, d'une part, à constituer, au sein de ladite zone géographique sélectionnée et en fonction de chaque critère cartographique sélectionné et d'au moins une contrainte fournie manuellement, des groupes de cellules définissant chacun une zone de localisation, et, d'autre part, en cas de détection d'un objet de type site, associé à des cellules appartenant à au moins deux zones de localisation différentes, à générer un message d'alarme.

10. Procédé selon la revendication 9, **caractérisé en ce que** ladite contrainte est une définition de limite(s) entre zones de localisation.

11. Procédé selon l'une des revendications 9 et 10, **caractérisé en ce que** lesdits critères géographiques sont choisis dans un groupe comprenant au moins des critères de sélection d'objets, des critères de localisation, et le relief au sein d'une zone géographique.

12. Procédé selon l'une des revendications 9 à 11, **caractérisé en ce que** lesdits critères d'occupation d'une zone géographique sont choisis dans un groupe comprenant au moins des critères de sélection d'axes de transport et des critères de sélection d'informations relatives à l'occupation d'une zone géographique.

13. Procédé selon l'une des revendications 9 à 12, **caractérisé en ce que** lesdits critères de communication sont choisis dans un groupe comprenant au moins la couverture radio, des critères de sélection de compteurs, des critères de sélection d'indicateurs de qualité de service, et un critère de sélection d'une décomposition connue en zones de localisation.

## Claims

1. A device (D) for optimizing the operation of at least part of a cellular communication network (RC) comprising objects, particularly of the cell type, with known geographic positions, said device (D) comprising means of processing (MT) designed, in the event of the selection of a geographic area covered by said network (RC) and of at least one map criterion exhibiting a relationship with objects and chosen from a group comprising at least geographic criteria, occupation criteria of a geographic area, and communication criteria, to create, within said selected geographic area and based on each selected map criterion, groups of cells each defining a location area, the device (D) comprising interface means (IHM) designed to allow a user to manually provide at least one constraint, and **characterized in that** said processing means (MT) are designed both to create, within said selected geographic area and based on each selected map criterion and each constraint provided, groups of cells each defining a location area, and also to generate an alarm message in the event that a object of the site type associated with cells belonging to at least two different location areas is detected.

2. A device according to claim 1, **characterized in that** said constraint is a definition of limit(s) between location areas.

3. A device according to one of the claims 1 and 2, **characterized in that** said interface means (IHM) are designed to allow a user to manually select at least one geographic area and at least one map criterion, and to communicate to said means of processing (MT) the definitions of the selected geographic area(s) and map criterion(-a).

4. A device according to one of the claims 1 to 3, **characterized in that** said geographic criteria are chosen from a group comprising at least object selection criteria, location criteria, and relief within a geographic area.

5. A device according to one of the claims 1 to 4, **characterized in that** said occupation criteria of a geographic area are chosen from a group comprising at least transportation routes and information selection criteria related to the occupation of a geographic area.

6. A device according to one of the claims 1 to 5, **characterized in that** said occupation criteria are chosen from a group comprising at least radio coverage, meter selection criteria, quality of service indicator selection criteria, and a criterion for selecting a known breakdown into location areas.

7. A device according to one of the claims 1 to 6, **characterized in that** it comprises means of storage (MS) capable of storing the geographic positions of said objects and map criteria exhibiting relationships with said objects.

8. A communication network (RC) management equipment (EG), comprising an optimization device (D) according to one of the preceding claims.

9. A method for optimizing the operation of at least part of a cellular communication network (RC) comprising objects, particularly of the cell type, with known geographic positions, said method consisting i) of storing the geographic positions of said objects and map criteria exhibiting relationships with said objects and chosen from a group comprising at least geographic criteria, occupation criteria of a geographic area, and communication criteria, and ii) in the event of the selection of a geographic area covered by said network (RC) and of at least one of said map criteria, to create, within said selected geographic area and based on each selected map criterion, groups of cells each defining a location area, which method enables a user to manually provide at least one constraint, and **characterized in that** it further consists of creating, within said selected geographic area and based on each selected map criterion and each constraint provided, groups of cells each defining a location area, and also, in the event that an object of the site type associated with cells belonging to at least two different location areas is detected, to generate an alarm message.

10. A method according to claim 9, **characterized in that** said constraint is a definition of limit(s) between location areas.

11. A method according to one of the claims 9 to 10, **characterized in that** said geographic criteria are chosen from a group comprising at least object selection criteria, location criteria, and relief within a geographic area.

12. A device according to one of the claims 9 to 11, **characterized in that** said occupation criteria of a geographic area are chosen from a group comprising at least transportation routes and information selection criteria related to the occupation of a geographic area.

13. A device according to one of the claims 9 to 12, **characterized in that** said communication criteria are chosen from a group comprising at least radio coverage, meter selection criteria, quality of service indicator selection criteria, and a criterion for selecting a known breakdown into location areas.

## Patentansprüche

1. Vorrichtung (D) zur Optimierung des Betriebs zumindest eines Teils eines zellularen Kommunikationsnetzwerks (RC), welches Objekte, insbesondere vom Typ einer Zelle, mit bekannten geografischen Positionen umfasst, wobei die besagte Vorrichtung (D) Verarbeitungsmittel (MT) umfasst, die dazu ausgelegt sind, im Fall der Auswahl eines von dem besagten Netzwerk (RC) abgedeckten geografischen Gebiets und mindestens eines kartografischen Kriteriums, welches eine Beziehung mit Objekten hat und in einer Gruppe mindestens bestehend aus geografischen Kriterien, Kriterien in Bezug auf die Belegung eines geografischen Gebiets und Kommunikationskriterien gewählt wird, innerhalb des besagten geografischen Gebiets und in Abhängigkeit von jedem ausgewählten kartografischen Kriterium Gruppen von Zellen zu bilden, welche jeweils ein Lokalisierungsgebiet definieren, wobei die Vorrichtung (D) Schnittstellenmittel (IHM) umfasst, die dazu ausgelegt sind, es einem Nutzer zu ermöglichen, manuell mindestens eine Beschränkung zu liefern, und **dadurch gekennzeichnet, dass** die besagten Verarbeitungsmittel (MT) dazu ausgelegt sind, einerseits innerhalb des besagten ausgewählten geografischen Gebiets und in Abhängigkeit von jedem ausgewählten kartografischen Kriterium und von jeder gelieferten Beschränkung Gruppen von Zellen zu bilden, welche jeweils ein Lokalisierungsgebiet definieren, und andererseits im Fall des Erfassens eines Objektes vom Typ Standort, der mit Zellen, die mindestens zwei unterschiedlichen Lokalisierungsgebieten angehören, assoziiert ist, eine Alarmmeldung zu erzeugen.

2. Vorrichtung nach Anspruch 1, **dadurch gekennzeichnet, dass** die besagte Beschränkung eine Definition einer Grenze/von Grenzen zwischen Lokalisierungsgebieten ist.

3. Vorrichtung nach einem der Ansprüche 1 und 2, **dadurch gekennzeichnet, dass** die besagten Schnittstellenmittel (IHM) dazu ausgelegt sind, es einem Nutzer zu ermöglichen, manuell mindestens ein geografisches Gebiet und mindestens ein kartografisches Kriterium auszuwählen und den besagten Verarbeitungsmitteln (MT) die Definitionen des/der ausgewählten geografischen Gebiets/Gebiete und des/der ausgewählten kartografischen Kriteriums/Kriterien zu übermitteln.

4. Vorrichtung nach einem der Ansprüche 1 bis 3, **dadurch gekennzeichnet, dass** die besagten geografischen Kriterien in einer Gruppe mindestens bestehend aus Objektauswahlkriterien, Lokalisierungskriterien und dem Relief innerhalb eines geografischen Gebiets gewählt werden.

5. Vorrichtung nach einem der Ansprüche 1 bis 4, **dadurch gekennzeichnet, dass** die besagten Kriterien in Bezug auf die Belegung eines geografischen Gebiets in einer Gruppe mindestens bestehend aus Transportrichtungsauswahlkriterien und Kriterien für die Auswahl von Informationen in Bezug auf die Belegung eines geografischen Gebiets gewählt werden.

6. Vorrichtung nach einem der Ansprüche 1 bis 5, **dadurch gekennzeichnet, dass** die besagten Kommunikationskriterien in einer Gruppe mindestens bestehend aus der Funkabdeckung, Zählerauswahlkriterien, Dienstgüteindikatorenauswahlkriterien und einem Kriterium für die Auswahl einer bekannten Aufgliederung in Lokalisierungsgebiete gewählt werden.

7. Vorrichtung nach einem der Ansprüche 1 bis 6, **dadurch gekennzeichnet, dass** sie Speichermittel (MS) umfasst, die geeignet sind, die geografischen Positionen der besagten Objekte sowie kartografische Kriterien, die Beziehungen mit den besagten Objekten haben, zu speichern.

8. Einrichtung (EG) zur Kommunikationsnetzwerkverwaltung (RC), umfassend eine Optimierungsvorrichtung (D) gemäß einem der vorstehenden Ansprüche.

9. Verfahren zur Optimierung des Betriebs zumindest eines Teils eines zellularen Kommunikationsnetzwerks (RC), welches Objekte, insbesondere vom Typ einer Zelle, mit bekannten geografischen Positionen umfasst, wobei das besagte Verfahren darin besteht,
i) die geografischen Positionen der besagten Objekte sowie kartografische Kriterien, welche Beziehungen mit den besagten Objekten haben und in einer Gruppe mindestens bestehend aus geografischen Kriterien, Kriterien in Bezug auf die Belegung eines geografischen Gebiets und Kommunikationskriterien gewählt werden, zu speichern, und
ii) im Fall der Auswahl eines von dem besagten Netzwerk (RC) abgedeckten geografischen Gebiets und mindestens eines der besagten kartografischen Kriterien innerhalb des besagten ausgewählten geografischen Gebiets und in Abhängigkeit von jedem ausgewählten kartografischen Kriterium Gruppen von Zellen zu bilden, welche jeweils ein Lokalisierungsgebiet definieren, wobei das Verfahren es einem Nutzer ermöglicht, manuell mindestens eine Beschränkung zu liefern, und **dadurch gekennzeichnet, dass** es weiterhin darin besteht, einerseits innerhalb des besagten ausgewählten geografischen Gebiets und in Abhängigkeit von jedem ausgewählten kartografischen Kriterium und von jeder gelieferten Beschränkung Gruppen von Zellen zu bilden, welche jeweils ein Lokalisierungsgebiet definieren, und andererseits im Fall der Erfassung eines Objektes vom Typ Standort, der mit Zellen, welche mindestens zwei unterschiedlichen Lokalisierungsgebieten angehören, ssozüert ist, eine Alarmmeldung zu erzeugen.

10. Verfahren nach Anspruch 9, **dadurch gekennzeichnet, dass** die besagte Beschränkung eine Definition einer Grenze/von Grenzen zwischen Lokalisierungsgebieten ist.

11. Verfahren nach einem der Ansprüche 9 und 10, **dadurch gekennzeichnet, dass** die besagten geografischen Kriterien in einer Gruppe mindestens bestehend aus Objektauswahlkriterien, Lokalisierungskriterien und dem Relief innerhalb eines geografischen Gebiets gewählt werden.

12. Verfahren nach einem der Ansprüche 9 bis 11, **dadurch gekennzeichnet, dass** die besagten Kriterien in Bezug auf die Belegung eines geografischen Gebiets in einer Gruppe mindestens bestehend aus Transportrichtungsauswahlkriterien und Kriterien für die Auswahl von Informationen in Bezug auf die Belegung eines geografischen Gebiets gewählt werden.

13. Verfahren nach einem der Ansprüche 9 bis 12, **dadurch gekennzeichnet, dass** die besagten Kommunikationskriterien in einer Gruppe mindestens bestehend aus der Funkabdeckung, Zählerauswahlkriterien, Dienstgüteindikatorenauswahlkriterien und einem Kriterium für die Auswahl einer bekannten Aufgliederung in Lokalisierungsgebiete gewählt werden.
